(19) Europäisches Patentamt
European Patent Office
Office européen des brevets

(11) Veröffentlichungsnummer: **0 276 649 B1**

# (12) EUROPÄISCHE PATENTSCHRIFT

(45) Veröffentlichungstag der Patentschrift: **03.11.93**

(51) Int. Cl.$^5$: **C08F 218/10**, C08F 214/26, C09D 127/18, //(C08F218/10, 216:14,214:26),(C08F214/26, 218:10,216:14)

(21) Anmeldenummer: **88100007.9**

(22) Anmeldetag: **04.01.88**

## (54) Vernetzbare, fluorhaltige Copolymere als Bindemittel für hochwitterungsstabile Lacke.

(30) Priorität: **10.01.87 DE 3700548**

(43) Veröffentlichungstag der Anmeldung:
**03.08.88 Patentblatt 88/31**

(45) Bekanntmachung des Hinweises auf die Patenterteilung:
**03.11.93 Patentblatt 93/44**

(84) Benannte Vertragsstaaten:
**DE FR GB IT NL**

(56) Entgegenhaltungen:
**DE-A- 3 131 441**
**DE-A- 3 415 975**
**US-A- 4 584 343**
**US-A- 4 631 326**

(73) Patentinhaber: **HOECHST AKTIENGESELLSCHAFT**

**D-65926 Frankfurt(DE)**

(72) Erfinder: **Schlipf, Michael, Dr.**
**Talhauser Strasse 27**
**D-8269 Burgkirchen(DE)**
Erfinder: **Manz, Albrecht, Dr.**
**Pappelweg 15**
**D-6200 Wiesbaden(DE)**
Erfinder: **Löhr, Gernot, Dr.**
**Schneibsteinstrasse 6**
**D-8269 Burgkirchen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft vernetzbare, fluorhaltige Copolymere, ein Verfahren für deren Herstellung, eine Lackzusammensetzung, die diese Copolymeren enthält und die Verwendung dieser Lackzusammensetzung.

Beschichtungssysteme auf der Basis von Fluorpolymeren sind in großer Zahl bekannt. Derartige Beschichtungen werden meist aus Dispersionen in flüssigen Dispergiermedien aufgebracht, deren Teilchengröße von relativ grobkörnigen bis hinunter zu kolloidalen Teilchengrößen reicht, wobei das flüssige Medium Wasser oder ein organisches Lösungsmittel oder eine Mischung aus beiden ist. Da die gängigen Fluorpolymeren in organischen Lösungsmitteln meist schwer oder gar nicht löslich sind, werden Beschichtungen aus Lösungen, insbesondere aus solchen organischen Lösungsmitteln, die in der Lackindustrie üblich sind, wie beispielsweise Ethylenglykolester, Methylisobutylketon, Toluol, Xylol und dergleichen, verhältnismäßig selten angetroffen.

Beschichtungssysteme dieser Art werden aus fluorhaltigen Copolymeren aufgebaut, wie sie beispielsweise aus der US-PS 4 151 340 und 4 345 057 bekannt sind. Die in der letztgenannten Druckschrift beschriebenen Quaterpolymeren aus Fluorolefinen, Cyclohexylvinylethern, Alkylvinylethern und Hydroxyalkylvinylethern sind wegen ihres Gehaltes an Hydroxylfunktionen einer Härtung zugänglich.

Sie ergeben Lacksysteme, die unter Einsatz von Isocyanat bereits bei Zimmertemperatur gehärtet werden können. Jedoch sind diese hinsichtlich ihrer Witterungsbeständigkeit und ihrer Pigmentierungshöhe (Pigmentaufnahmevermögen) noch nicht voll befriedigend.

In der US-PS 4 584 343 werden Lacksysteme auf der Basis von Fluorcopolymeren beschrieben, die aufgebaut sind aus einem Fluorolefin, einem verseifbaren und einem kettenverzweigten nicht-verseifbaren Vinylester. Hierbei müssen die zur Härtung benötigten funktionellen Gruppen durch einen zusätzlichen Nachbehandlungsschritt in das Copolymere eingeführt werden.

Bei funktionalisierten Fluorcopolymeren, die nach diesem Verfahren hergestellt worden sind und die als funktionelle Gruppe OH-Gruppen tragen, die durch Verseifung von Vinylacetat eingeführt worden sind, werden teilweise längere Aushärtzeiten beobachtet. Ursache hierfür ist einerseits die im Vergleich zu primären OH-Gruppen geringere Reaktivität der hier vorliegenden sekundären OH-Gruppen, andererseits unterliegen Vernetzungsstellen, die direkt am Polymergerüst liegen, einer gewissen Abschirmung.

Fluorcopolymere mit primären OH-Gruppen, wie sie in der US-PS 4 345 057 beschrieben werden, zeigen beim Einsatz für kalthärtende Beschichtungssysteme während der Lackkonsolidierung Entmischungseffekte, wenn, wie im beschriebenen Fall, diesem Effekt nicht durch eine gezielte Comonomerauswahl Rechnung getragen wird.

In der europäischen Offenlegungsschrift 180 962 wird unter anderem ein aus 4 Monomer-Komponenten bestehendes Fluorcopolymeres für den Einsatz als unter milden Bedingung härtbares Lacksystem beschrieben, das aufgebaut ist aus einem Fluorolefin, einem Vinylester, einem Alkylvinylether und einem OH-Gruppen tragenden Vinylether. Dabei soll nach dortiger Aussage der Anteil an Alkylvinylether in diesen Fluorcopolymeren eine Mindestmenge von 5 Mol-% nicht unterschreiten, da sonst das resultierende Copolymere nur in sehr niedriger Ausbeute erhalten wird. Diese Aussage ist offenbar von den geprüften Comonomeren Chlortrifluorethylen und Hexafluorpropen in spekulativer Weise auf das ebenfalls genannte Tetrafluorethylen übertragen worden. Es stellt sich jedoch überraschenderweise heraus, daß beim Einbau von Tetrafluorethylen (TFE) auf den Alkylvinylether als vierte Komponente verzichtet werden kann, wodurch die Reproduzierbarkeit der Reaktionsführung der Copolymerisation beträchtlich verbessert wird, ohne daß schlechte Ausbeuten in Kauf genommen werden müssen.

Die vorliegende Erfindung stellt somit vernetzbare, fluorhaltige Copolymere zur Verfügung, die dadurch gekennzeichnet sind, daß sie bestehen aus

a) 15 bis 70 Mol-% an copolymerisierten Einheiten eines Vinylesters der Formel

$$CH_2{=}CH{-}O{-}CO{-}\underset{\displaystyle R^3}{\overset{\displaystyle R^1}{\underset{|}{\overset{|}{C}}}}{-}R^2 ,$$

worin $R^1$, $R^2$ und $R^3$ verzweigte oder geradkettige Alkylreste oder Cycloalkylreste darstellen, höchstens einer dieser Reste Wasserstoff und mindestens einer dieser Reste eine Methylgruppe ist, wobei ferner

der gesamte Acylrest des Vinylesters mindestens 9 und höchstens 28 C-Atome besitzt,

b) 5 bis 50 Mol-% an copolymerisierten Einheiten eines Hydroxyalkylvinylethers der Formel,

$CH_2 = CH\text{-}O\text{-}R^4\text{-}OH$ ,

worin $R^4OH$ eine verzweigte oder geradkettige Hydroxyalkylgruppe mit 1 bis 6 C-Atomen darstellt,

c) copolymerisierten Einheiten des Tetrafluorethylens in einer Menge, die die Summe der Komponenten a) plus b) plus c) auf 100 ergänzt, jedoch mit der Maßgabe, daß mindestens 10 Mol-% an copolymerisierten Einheiten des Tetrafluorethylens in den Copolymeren vorhanden sind.

Durch Verwendung von Fluorcopolymeren mit einer Monomerzusammensetzung, wie sie in dieser Erfindung beschrieben wird, läßt sich eine problemlose Lackkonsolidierung auch bei der Anwendung für kalthärtende Beschichtungssysteme erreichen.

Vorzugsweise bestehen diese vernetzbaren, fluorhaltigen Copolymeren aus:

a) 15 bis 55 Mol-% an copolymerisierten Einheiten eines Vinylesters der oben genannten Komponente a),

b) 5 bis 40 Mol-% an copolymerisierten Einheiten eines Hydroxyalkylvinylethers der oben genannten Komponente b),

c) copolymerisierten Einheiten des Tetrafluorethylens in einer Menge, die die Summe der Komponenten a) plus b) plus c) auf 100 ergänzt, jedoch mit der Maßgabe, daß mindestens 25 Mol-% an copolymerisierten Einheiten in den Copolymeren vorhanden sind.

Bevorzugt sind als Komponente a) in den erfindungsgemäßen Copolymeren Vinylester mit verzweigten Acylresten

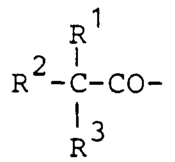 ,

wobei diese Acylreste (einschließlich der CO-Gruppe) 9 bis 11 C-Atome besitzen und worin höchstens einer dieser Reste Wasserstoff und mindestens einer dieser Reste eine Methylgruppe ist.

Die diesen Acylresten zugrundeliegenden verzweigten Carbonsäuren sind nach der Koch'schen Synthese aus Monoolefinen Kohlenmonoxid und Wasser zugänglich. Die genannten Carbonsäuren sind unter dem Namen ®Versatic-Säuren oder ®Neo-Säuren dem Fachmann bekannt. Die entsprechenden Vinylester lassen sich aus solchen verzweigten Carbonsäuren durch Transvinylierung mit Vinylacetat gewinnen. Sie sind aber auch nach der Reppe-Synthese durch Anlagerung von Acetylen an die entsprechenden Carbonsäuren zugänglich.

Geeignete Hydroxyalkylvinylether für die Komponente b) des Copolymeren sind solche der Formel $CH_2 = CH\text{-}O\text{-}R^4\text{-}OH$, worin $R^4OH$ eine verzweigte oder geradkettige Hydroxyalkylgruppe, insbesondere eine solche mit 1 bis 6 C-Atomen, darstellt. Als Beispiele seien genannt Hydroxymethylvinylether, 2-Hydroxyethylvinylether, 3-Hydroxy-n-propylvinylether, 2-Hydroxy-n-propylvinylether, 2-Hydroxy-1-methylethylvinylether, 4-Hydroxy-n-butylvinylether, 3-Hydroxy-n-butylvinylether, 2-Hydroxy-2-methylpropylvinylether, 5-Hydroxy-n-pentylvinylether und 3-Hydroxy-n-hexylvinylether genannt. Besonders bevorzugt wird als Hydroxyalkylvinylether der 4-Hydroxy-n-butylvinylether eingesetzt.

Die die Fluoratome in das Copolymere einführende Komponente c) ist Tetrafluorethylen.

Die Erfindung betrifft weiterhin eine Lackzusammensetzung für industrielle Anwendungen, enthaltend übliche Pigmente und Füllstoffe, Vernetzungskomponenten, Lösungsmittel und für Lacke übliche Hilfsstoffe, die dadurch gekennzeichnet ist, daß sie 10 bis 60 Gew.-% eines vorstehend charakterisierten Copolymeren enthalten. Die Vernetzungskomponente ist hierbei vorzugsweise ein Melaminharz, ein Polyisocyanat oder ein blockiertes Polyisocyanat.

Es ist wesentlich, daß das erfindungsgemäße vernetzbare, fluorhaltige Copolymere die copolymerisierten Struktureinheiten des Tetrafluorethylens, des Vinylesters der Komponente a) und des Hydroxyalkylvinylethers der Komponente b) in den angegebenen Verhältnissen enthält.

Wenn der Gehalt an Tetrafluorethylen-Einheiten zu gering ist, so wird der Vorteil einer ausreichenden Witterungsbeständigkeit nicht erzielt. Wenn der Gehalt an Tetrafluroethylen-Einheiten zu hoch ist, so treten Nachteile hinsichtlich der Aufarbeitbarkeit und der Konfektionierung auf. Wenn andererseits der Gehalt an Vinylester der Komponente b) zu gering ist, so wird die Löslichkeit des erfindungsgemäßen Copolymeren in

typischen Lacklösemitteln zu stark herabgesetzt und die Pigmentierungshöhe nimmt ab.

Es ist ferner wesentlich, daß das erfindungsgemäße Copolymere Struktureinheiten eines Hydroxyalkylvinylethers in den angegebenen Mengen enthält, und zwar im Hinblick auf die Verbesserung der Härtbarkeit ohne Beeinträchtigung der verschiedenen anderen wesentlichen Eigenschaften eines Harzes für den Einsatz als Lack-Bindemittel. Wenn der Gehalt an diesem Hydroxyalkylvinylether zu hoch ist, so wird die Flexibilität des gehärteten Überzugs bis zur Sprödigkeit herabgesetzt und die Gelbildungszeit (Topfzeit) des Copolymeren in Gegenwart des Härtungsmittels so stark verringert, daß eine ausreichende Verarbeitungszeit nicht mehr gewährleistet ist. Wenn andererseits der Gehalt an diesen Hydroxyalkylvinylethern zu gering ist, so ist der Effekt der Verbesserung der Härtungseigenschaften praktisch nicht vorhanden oder nicht ausgeprägt, es werden sehr lange Härtungszeiten benötigt und die Chemikalienfestigkeit des Überzugs ist unzureichend.

Die Herstellung des erfindungsgemäßen Copolymeren erfolgt in der Weise, daß zunächst der Vinylester der Komponente a), der Hydroxyalkylvinylether der Komponente b) und das Tetrafluorethylen der Komponente c) der Copolymerisation unterworfen werden, und sodann das Polymerisationsmedium sowie das Rest-Monomere destillativ entfernt bzw. durch Ausfällung des gebildeten Polymeren abgetrennt werden. Das so dargestellte Copolymere wird zur Verwendung als Lackbindemittel in üblichen Lacklösemitteln gelöst.

Polymerisiert wird vorzugsweise in organischen Lösungsmitteln. Dafür geeignete Lösungsmittel sind insbesondere perfluorierte oder mit Fluor und Chlor perhalogenierte Lösungsmittel, wie beispielsweise 1,1,2-Trichlor-1,2,2-trifluorethan oder Perfluorcyclobutan, ferner auch Alkanole wie tert.-Butanol, Carbonsäureester wie zum Beispiel n-Butylacetat oder n-Propylacetat oder ferner aliphatische und cycloaliphatische Ketone, zum Beispiel Methylisobutylketon oder Cyclohexanon.

Die erfindungsgemäßen Copolymeren können aber auch in Form kolloidaler Dispersionen nach dem Verfahren der Emulsionspolymerisation in wäßriger Phase gewonnen werden. Dazu müssen der wäßrigen Flotte Emulgatoren in einer Menge von 0,01 bis 2 Gew.-%, vorzugsweise von 0,05 bis 0,5 Gew.-%, bezogen auf die Gewichtsmenge des vorgelegten wäßrigen Polymerisationsmediums, zugefügt werden. Im Prinzip sind alle dem Fachmann geläufigen nichtionischen und anionischen Emulgatoren, die für die Emulsionspolymerisation von Fluorolefinen geeignet sind, einsetzbar. Solche Emulgatoren sind die Ammonium- und Alkalisalze von $\omega$-Hydroperfluorcarbonsäuren, von Fluoralkoxypropionsäuren, insbesondere der Perfluorpropoxypropionsäure, von Perfluoralkylsulfonsäuren und Perfluoralkylphosphonsäuren sowie vorzugsweise von Perfluorcarbonsäuren mit längeren Perfluoralkylketten, insbesondere solchen mit 6 bis 12 C-Atomen im Perfluoralkylrest. Die genannten Emulgatoren können auch in Form ihrer freien Säuren eingesetzt und gegebenenfalls mit Ammoniak neutralisiert werden, wobei durch das Verhältnis von Säure und Ammoniak gleichzeitig der pH-Wert eingestellt werden kann. Auch nicht-fluorierte Emulgatoren können gegebenenfalls eingesetzt werden. Ferner können gegebenenfalls Puffersubstanzen, wie beispielsweise die Alkali- und Ammoniumsalze der Oxalsäure, der Phosphorsäure oder der Essigsäure, bei der Copolymerisation zugegen sein. Es ist zweckmäßig, die Copolymerisation im schwach sauren oder im alkalischen Bereich durchzuführen, also etwa bei pH-Werten von 6 bis 9.

Wird die Copolymerisation in Form einer Lösungspolymerisation durchgeführt, so ist es ebenfalls zweckmäßig, ein basisches Agens, wie zum Beispiel Natrium- oder Kaliumcarbonat zuzusetzen und während der gesamten Polymerisation ein schwach alkalisches Polymerisationsmedium aufrechtzuerhalten.

Die Herstellung der erfindungsgemäßen Copolymeren kann schließlich auch nach dem Verfahren der Suspensionspolymerisation durchgeführt werden. Dazu stellt man den erforderlichen schwach alkalischen pH-Bereich durch die Zugabe geeigneter Puffersubstanzen, die meist gleichzeitig auch als Fällungsmittel wirken, ein, wie beispielsweise Ammoniumoxalat, Borax, Ammoniumcarbonat, Ammoniumcarbaminat oder Ammoniumpentaborat oder Gemische solcher Verbindungen. Es kann zweckmäßig sein, auch der Suspension eine kleine Menge der obengenannten Emulgatoren hinzuzufügen, um Verklumpungen und Kesselbeläge zu vermeiden und eine gleichmäßigere Teilchengröße des Copolymerisates zu erreichen. Die Gewichtsmenge an solchen Emulgatoren liegt hier im allgemeinen unter 150 ppm, vorzugsweise unter 50 ppm, bezogen auf die Gewichtsmenge der bei Polymerisation vorgelegten wäßrigen Flotte.

Die Copolymerisation der genannten Comonomeren wird in Gegenwart von Radikale bildenden Katalysatoren in Gang gesetzt. Für die Bildung von Radikalen kommen in Frage entweder eine harte, energiereiche Strahlung oder wasserlösliche radikalbildende Katalysatoren, wie sie in großer Zahl dem Fachmann für die Copolymerisation von Fluorolefinen bekannt sind. Solche Katalysatoren sind insbesondere peroxidische Verbindungen. Nur beispielsweise seien hier genannt Wasserstoffperoxid, Acylperoxide wie zum Beispiel Diacetylperoxid, Dipropionylperoxid, Dibutyrylperoxid, Dibenzoylperoxid, Benzoylacetylperoxid, Dilauroylperoxid, Dibernsteinsäureperoxid oder Diglutarsäureperoxid. Weiterhin sind zu nennen wasserlösliche Persäuren, wie Peressigsäure sowie deren wasserlösliche Salze (insbesondere die Ammonium-, Natrium- oder

Kaliumsalze) oder deren Ester, wie zum Beispiel tert.-Butylperoxyacetat und tert.-Butylperoxypivalat. Es können auch eingesetzt werden die wasserlöslichen Salze, insbesondere die Ammonium-, Kalium- und Natriumsalze von anderen Persäuren wie Peroxomono- und Peroxodisulfate, Perphosphate, Perborate und Percarbonate. Geeignet sind ferner Perfluoracylperoxide oder ω-Hydroperfluoracylperoxide. Eine weitere Klasse von anwendbaren Katalysatoren stellen gewisse wasserlösliche Azoverbindungen dar. Vor allem im niedrigen Temperaturbereich können als Katalysatoren auch die bekannten wirksamen Redox-Systeme eingesetzt werden, die bei Temperturen zwischen 10 und 50 °C bereits in ausreichendem Maße Radikale erzeugen. Von den dem Fachmann für die Polymerisation von Fluorolefinen geläufigen Redox-Systemen seien hier nur beispielhaft genannt die Kombination von wasserlöslichen peroxidischen Verbindungen, vorzugsweise von Peroxodisulfaten mit Hydrogensulfit oder mit Disulfit oder deren Anlagerungsprodukten mit Formaldehyd (®Rongalit), mit Thiosulfat sowie mit Diimin freisetzenden Verbindungen, wie zum Beispiel mit Hydrazin oder Azodicarbonsäureamid. Auch in diesen Redox-Kombinationen sind die Salze, vorzugsweise die Alkali- und insbesondere die Ammoniumsalze der genannten Verbindungen, zugegen. Erfolgt die Polymerisation in einem organischen Lösungsmittel, so müssen aus den obengenannten Katalysatoren jeweils diejenigen ausgewählt werden, die im betreffenden Lösungsmittel ausreichend löslich sind.

Dabei kann die gesamte Katalysatormenge am Beginn der Reaktion der Polymerisationsflotte zugefügt werden. Im Falle größerer Ansätze kann es jedoch zweckmäßig sein, die Gesamtmenge des Katalysators kontinuierlich im Verlauf der Polymerisation zuzuschleusen. Ebenso kann man auch einen Teil der Katalysatormenge am Beginn vorgeben und den Rest einmalig oder in Teilmengen nachschleusen. Die Zugabe von Coaktivatoren, also beispielsweise von löslichen Salzen des Eisens und des Silbers, kann von Vorteil sein, insbesondere bei Einsatz von Redox-Systemen als Katalysatoren.

Zur Steuerung des Molekulargewichts und der Molekulargewichtsverteilung des erhaltenen Copolymeren im gewünschten Bereich kann man die Copolymerisation auch in Gegenwart eines zweckentsprechenden Kettenübertragungsmittels, beispielsweise von Methylenchlorid oder eines Malonsäurealkylesters durchführen.

Die Copolymerisation wird bei Temperaturen von 0 bis 110 °C, vorzugsweise von 30 bis 90 °C, durchgeführt, wobei sich diese Temperatur im einzelnen insbesondere nach der Art des eingesetzten Katalysators richtet. Das Tetrafluorethylen wird bei der Copolymerisation unter Druck aufgegeben und dieser Druck dann aufrechterhalten. Er kann im Bereich von wenig über Normaldruck (etwa 1 bar Überdruck), bis etwa 40 bar liegen, vorzugsweise wird ein Druck von 5 bis 25 bar eingehalten. Bei der Lösungspolymerisation muß der Druck in jedem Fall über dem Dampfdruck des Lösungsmittels bei der angewendeten Polymerisationstemperatur liegen.

Bevorzugt werden bei Beginn der Copolymerisation etwa 5 bis 30 Gew.-% der theoretisch erforderlichen Menge an Vinylester der Komponente a) und Vinylether der Komponente b) im Polymerisationsgefäß vorgelegt, der Rest wird dann im Verlauf der Copolymerisation mit dem Tetrafluorethylen zudosiert. Es ist jedoch auch möglich, nur eine Teilmenge des Vinylesters der Komponente a) vorzulegen und den Rest der theoretisch erforderlichen Menge zusammen mit der Gesamtmenge an Vinylether der Komponente b) und an Tetrafluorethylen nachzuführen.

Schließlich kann auch die Polymerisation mit der gleichzeitigen Zufuhr aller Komponenten (wobei eine oder mehrere auch untereinander vorgemischt sein können) beginnen, und diese Zufuhr wird während des Prozesses fortlaufend weitergeführt.

Nach Beendigung der Polymerisation wird die Polymerisationsflotte in üblicher Weise aufgearbeitet. Im Falle der Fällungspolymerisation nach dem Suspensionsverfahren wird das körnige Polymerisat nach üblichen Trennungsmethoden abgetrennt, beispielsweise durch Filtrieren, Absieben oder Zentrifugieren. Im Falle der Emulsionspolymerisation wird die erhaltene kolloidale Dispersion durch Hinzufügen von üblichen Koagulierungsmitteln, wie zum Beispiel Elektrolytsalzen, Mineralsäuren oder organischen Lösungsmitteln oder auch durch das Einbringen von hohen Scherkräften zur Koagulation gebracht und das Koagulat in üblicher Weise von der wäßrigen Flotte abgetrennt. Das so erhaltene feuchte Polymerisat wird gewaschen und bei Temperaturen von 10 bis 70 °C getrocknet, gegebenenfalls unter Hindurchblasen von Inertgas. Im Falle der Lösungspolymerisation erfolgt die Aufarbeitung durch destillative Abtrennung des Polymeren von Polymerisationsmedium und Restmonomeren. Das Molekulargewicht beträgt $\overline{M}_{rel}$ = 2 000 bis 90 000, vorzugsweise 4 500 bis 75 000. Die Molekulargewichtsbestimmung des erfindungsgemäßen Terpolymeren erfolgt durch Gelpermeationschromatographie (GPC) in Tetrahydrofuran als Relativmessung, bezogen auf Polystyrol-Standards.

Das erfindungsgemäße Copolymere hat eine inhärente Viskosität, gemessen bei 25 °C in Tetrahydrofuran, von 0,02 bis 1,8 dl/g, vorzugsweise von 0,03 bis 1,6 dl/g, und speziell von 0,04 bis 1,1 dl/g. Wenn die Viskosität zu gering ist, so ist die mechanische Festigkeit unzureichend, während bei einer zu hohen Viskosität die Harzkonzentration im Lack im Hinblick auf die Viskosität niedrig sein muß und ferner die

Verarbeitbarkeit bei Formulierung von gut löslichen Lacksystemen aus solchen Harzen beeinträchtigt ist. Lösungen von Fluorcopolymeren gemäß der US-PS 4 345 057 haben bei vergleichbarem Molekulargewicht und vergleichbarem Feststoffgehalt eine höhere Viskosität. Da durch die Applikationsform (Streichen, Rollen, Spritzen etc.) die Viskosität des formulierten Lackes vorgegeben ist, können Lacksysteme auf Basis der erfindungsgemäßen Fluorcopolymeren höher pigmentiert werden als die bekannten.

Das erfindungsgemäße Copolymere soll zweckmäßigerweise eine OH-Zahl von 25 bis 200 mg KOH/g, vorzugsweise 30 bis 140 mg KOH/g aufweisen.

Die auf diese Weise erhaltenen erfindungsgemäßen Copolymeren sind in einer Vielzahl von organischen Lösungsmitteln gut löslich, vor allem in Lösungsmitteln und Lösungsmittelgemischen, wie sie in der Lackindustrie üblicherweise verwendet werden.

Solche Lösungsmittel werden vor allem aus den folgenden Gruppen ausgewählt: aliphatische Alkohole mit 1 bis 8, insbesondere mit 4 bis 8 C-Atomen; Polyglykole wie Ethylendiglykol, Ethylentriglykol, Propylendiglykol, Propylentriglykol; Mono- und Diether solcher Glykole, wie beispielsweise Ethylenglykolmonoethylether, Ethylenglykoldiethylether, Ethylenglykolmonobutylether, Ethylenglykoldibutylether, Propylenglykolmonomethylether; Glykolester oder Glykoletherester, wie beispielsweise Ethylenglykolacetat oder Ethylenglykolacetatethylether, Propylenglykolacetatethylether und -methylether; ferner alkylierte und dialkylierte Aromaten, wie beispielsweise Xylol und Diethylbenzol; Ketone wie zum Beispiel Methylisobutylketon, Cyclohexanon und Isophoron; Carbonsäureester, insbesondere Ester der Essigsäure und Propionsäure mit Alkoholen von 1 bis 6 C-Atomen; schließlich alle Gemische solcher Lösungsmittel, soweit sie homogen miteinander mischbar sind. Das Mischungverhältnis von gelösten Copolymeren zu Lösungsmittel kann 95 : 5 = 5 : 95, vorzugsweise 90 : 10 = 10 : 90, betragen, es sind also auch Lacksysteme mit hohen Bindeharzanteilen herstellbar.

Das Copolymere dieser Erfindung enthält Hydroxyalkylvinylether-Einheiten, deren OH-Gruppen eine chemische Härtung des Lacks nach der Applikation ermöglichen. Je nach Auswahl des Vernetzungsmechanismus kann die Härtung bei Temperaturen zwischen 10 °C und 300 °C, vorzugsweise zwischen 20 °C und 250 °C, erfolgen.

Wenn das erfindungsgemäße Copolymere zur Herstellung eines wärmehärtbaren Lacks verwendet wird, so können verschiedene Härter wie Melaminharze, Harnstoffharze, mehrbasiche Säuren und Anhydride sowie Polyisocyanate und blockierte Polyisocyanate zugemischt werden, wobei man ein Ein-Komponenten-Beschichtungssystem erhält.

Daraus entstehen Überzüge, die hervorragend verlaufen und besonders elastische, haftfeste, korrosions- und witterungsstabile, insbesondere wasserfeste Grundierungen, Decklacke und Einschichtlackierungen ergeben. Für das Härten solcher mit Aminoplastharzen modifizierter Lacke sind Einbrenntemperaturen von mindestens 80 °C erforderlich. Man kann die Vernetzungsreaktion durch Zusatz eines sauren Katalysators, wie beispielsweise p-Toluolsulfonsäure oder deren Salze, beschleunigen.

Typische Beispiele für Aminoplaste sind Kondensationsprodukte von Aminogruppen tragenden Verbindungen, wie beispielsweise Melamin, Harnstoff, Acetoguanamin oder Benzoguanamin,und Aldehyden, wie beispielsweise Formaldehyd, Paraformaldehyd, Acetaldehyd oder Glyoxal, sowie Produkte, die durch Veretherung dieser Kondensationsprodukte mit Alkoholen erhalten werden. Hierzu werden vorzugsweise $C_1$- bis $C_4$-Alkohole verwendet. Als Beispiele hierzu seien genannt: hexamethylverethertes Methylolmelamin, hexabutylverethertes Methylolmelamin, methyl-butylverethertes Methylolmelamin, methylverethertes Methylolmelamin, butylverethertes Methylolmelamin und isobutylverethertes Methylolmelamin. Vom Gesichtspunkt der Kompatibilität mit dem erfindungsgemäßen Copolymeren sind vorzugsweise methylveretherte Methylolmelamine und hier im besonderen penta- bis hexamethylveretherte Methylolmelamine zu verwenden.

Typische Beispiele für mehrbasische Säuren sind Acrylharze mit mindestens zwei Carboxylgruppen je Molekül, Polyesterharze mit mindestens zwei Carboxylgruppen je Molekül und aromatische polybasische Säuren wie zum Beispiel Trimellitsäure und Pyromellitsäure.

Typische Beispiele für polybasische Säureanhydride sind Bernsteinsäureanhydrid, Trimellitsäureanhydrid, Pyromellitsäureanhydrid und Vinylpolymere mit Carbonsäureanhydrid-Gruppen

Typische Beispiele für blockierte Polyisocyanate werden erhalten, wenn man die aus der Polyurethanchemie bekannten Polyisocyanate mit konventionellen Blockierungsmitteln, wie zum Beispiel Alkoholen, Verbindungen mit phenolischen OH-Gruppen, Oximen, Lactamen, Acetessigsäureethylestern und N-monosubstituierten Carbonsäureamiden schützt.

Wenn andererseits das Copolymere zur Herstellung eines Lackes verwendet wird, bei dem die Härtung schon bei Raumtemperatur erfolgen soll, so wird als Vernetzer ein nicht-blockiertes Polyisocyanat verwendet. Bei dieser Applikation wird das Härtungsmittel vor Gebrauch gesondert zugemischt und man arbeitet mit einem Zweikomponenten-Beschichtungssystem.

Typische Beispiele für Polyisocyanate sind aliphatische Diisocyanate wie Hexamethylendiisocyanat, Trimethylhexamethylendiisocyanat und Tetramethylendiisocyanat; alicyclische Diisocyanate wie Xyloldiisocyanat, Methylcyclohexan-2,4- oder -2,6-diisocyanat, Isophorondiisocyanat und 4,4′-Methylen-bis-cyclohexylisocyanat; Polyisocyanate mit einer Biuretverzweigung, die erhalten werden durch Umsetzung der genannten Polyisocyanate mit Wasser; und Polyisocyanate mit einem Isocyanuratring, die erhalten werden durch Polymerisation der genannten Diisocyanate.

Die Isocyanat-Additionsreaktion wird von zahlreichen Katalysatoren beschleunigt, wobei solche mit Elektronen-Donator- (Lewis-Basen) oder -Acceptoreigenschaften (Lewis-Säuren) am wichtigsten sind. Tertiäre Amine, wie zum Beispiel Triethylamin, Diethylethanolamin, Dimethylethanolamin, 1,4-Diaza-bicyclo-[2,2,2]-octan und Cyclohexyldimethylamin sind als Lewis-Basen wirksame Katalystoren. Auch das als Acylierungskatalysator bekannte 4-Dimethylaminopyridin katalysiert die Isocyanatreaktion. Unter den katalytisch wirksamen Lewis-Säuren sind die Zinn-Verbindungen am wichtigsten. So werden Zinn(IV)-Verbindungen, wie beispielsweise Dibutylzinn-dilaurat und -diacetat oder Zinn(II)-Verbindungen wie Zinndioctanoat, als sehr wirksame Katalysatoren eingesetzt.

Schließlich ist auch die Vernetzung mit Epoxidharzen möglich, die ebenfalls in der Wärme und mit Katalysatoren, insbesondere mit Lithiumsalzen und quaternären Ammoniumsalzen, durchgeführt wird.

Für die Formulierung von Lacksystemen können alle in der Lackindustrie gängigen Pigmente und Extender eingesetzt werden, insbesondere Titandioxid, Eisenoxide, aber auch Cadmiumsulfid, Zinksulfid, Bleiweiß, Bariumsulfat, pyrogene Kieselsäure, Bentone und Kreide. Die Pigmentierungshöhe Bindemittel (das heißt erfindungsgemäßes Copolymeres) : Pigment liegt im Bereich eines Gewichtsverhältnisses von 1 : 0,2 bis 1 : 3,0.

Ferner können für solche Lackrezepturen übliche Additive, wie beispielsweise Verlaufmittel, Dispergiermittel, Netzmittel, UV-Absorber oder Hilfsmittel, zur Verbesserung von Glanz oder Haftung enthalten sein.

Bei dem Verfahren der Vermischung des Copolymeren mit dem Lösungsmittel, dem Pigment und anderen Additiven kann man verschiedenste, herkömmliche Geräte für die Lackherstellung einsetzen, zum Beispiel Kugelmühlen, Lackschüttelgeräte, Sandmühlen, Strahlmühlen, Drei-Walzenmühlen, Kneter und Dissolver.

Die unter Zusatz der genannten Vernetzungsmittel formulierten Lacksysteme ergeben Überzüge, die auf die verschiedensten Substrate aufgebracht und, je nach Vernetzungskomponente, bei Raumtemperatur gehärtet oder bei höheren Temperaturen eingebrannt werden können. Substrate dafür sind insbesondere Metalle wie beispielsweise Eisen, Stahl, Aluminium, Kupfer, Bronze und Messing, aber auch andere harte Oberflächen wie Glas, Keramik,Beton oder auch Holz oder Kunststoff-Oberflächen.

Das Aufbringen kann mit allen üblichen Methoden bewerkstelligt werden, wie Spritzen, Rakeln, Bürsten, Rollen, Tauchen, Fluten, Walzen oder Streichen. Besonders geeignet sind die auf Basis der erfindungsgemäßen Copolymeren formulierten Lacksysteme für industrielle Einbrennlackierungen, vor allem nach dem sogenannten Bandbeschichtungsverfahren ("coil coating"), einem kontinuierlichen Verfahren zur Beschichtung von Metallbändern mit Geschwindigkeiten von 30 bis zu 150 m/min. Nach diesem Verfahren werden vor allem Bleche aus kaltgewalztem Stahl, verzinktem Stahl, aus Aluminium und aus Aluminiumlegierungen beschichtet; für allgemeine Industrielackierungen kommen auch alle technischen Stahlsorten, Buntmetalle und durch Bonderisieren vorbehandelte Bleche in Betracht.

Die aus Überzugsmitteln auf Basis der erfindungsgemäßen Copolymeren erhaltenen Überzüge zeichnen sich vor allem aus durch eine hervorragende Bewitterungsstabilität, wie sie sich beispielsweise im sogenannten "Sun Test" zu erkennen gibt. Dieser Test gestattet es, in relativ kurzen Zeiträumen Aussagen über die Bewitterungsstabilität zu machen:

Proben werden mit einem Xenon-Strahler über Tage oder Wochen jeweils 3 min unter Wasser und anschließend 17 min im Trocknen belichtet, und dieser Rhythmus wird beliebig oft wiederholt. Unter diesen Testbedingungen zeigt ein siliconmodifiziertes Polyesterharz, das als besonders vergilbungsbeständig angesehen wird, nach 200 h die ersten Vergilbungserscheinungen und Glanzverlust, während bei Proben, die die erfindungsgemäßen Copolymeren enthalten, auch nach 1000 h noch keine Vergilbung und kein Glanzverlust zu beobachten ist.

Während üblicherweise Lacksysteme und Überzugsmittel, die auf Basis von fluorhaltigen Polymeren formuliert worden sind, nur schwierig in homogener Verteilung pigmentiert werden können, gelingt dies überraschenderweise mit den auf Basis von erfindungsgemäßen Copolymeren hergestellten Formulierungen sehr leicht.

Die erfindungsgemäßen Copolymeren zeichnen sich aus durch hohe Reaktivität mit Vernetzungskomponenten aller Art, was eine schnelle und vollständige Durchhärtung ermöglicht. Die aus solchen Lacksystemen hergestellten Überzüge und Filme zeigen gute Deckkraft, Glätte, Elastizität, Haftung, Oberflächenhärte, einen hohen Glanz sowie Chemikalien- und Witterungsbeständigkeit.

Die Erfindung wird durch folgende Beispiele erläutert:

Beispiel 1

In einem 40-Liter-Kessel werden 20 l tert.-Butanol, dem 10 g Kaliumcarbonat zugesetzt wurden, vorgelegt. Die Temperatur des vorgelegten Mediums wird auf 30 °C gebracht und der Behälter sodann in üblicher Weise durch Spülen mit Stickstoff von Sauerstoff befreit. Durch zweimaliges Aufpressen von Tetrafluorethylen (TFE) auf 1,6 bar wird die Flotte mit TFE gesättigt. Nach dem Aufheizen des Mediums auf 75 °C wird unter Rühren TFE bis zu einem Druck von 10 bar aufgepreßt. Die Polymerisation wird gestartet durch Zugabe von Bis-(4-tert.-butylcyclohexyl)peroxidicarbonat, gelöst in einem Monomerengemisch, bestehend aus einem ω-Hydroxy-n-butylvinylether (HBVE) und ®Versatic-Vinylester, dessen Acylrest ein Gemisch darstellt aus im wesentlichen einer Acylkomponente mit $R^1$ = $CH_3$, $R^2$ = $C_2H_5$, $R^3$ = $CH_3(CH_2)_4$- und einer weiteren Acylkomponente mit $R^1$ = $CH_3$, $R^2$ = $CH_3$, $R^3$ = $CH_3(CH_2)_5$- Durch Nachdosieren von TFE wird der Druck im Kessel auf 10 bar gehalten und weiteres Monomerengemisch zusammen mit dem Initiator entsprechend dem TFE-Verbrauch zugegeben. Die Nachdosierung erfolgt kontinuierlich und ist nach 2 h beendet. Insgesamt werden 1320 g TFE, 1800 g des genannten Vinylesters, 810 g HBVE und 240 g Bis(4-tert.-butylcyclohexyl)peroxidicarbonat zugesetzt. Eine dreiviertel Stunde nach dem Ende der Monomer- und Initiatorzugabe, nachdem der Druck im Polymerisationskessel auf 9,6 bar gefallen ist, ist die Polymerisation beendet. Man erhält eine klare Produktlösung mit einem Feststoffgehalt von 20 %. Der Restmonomergehalt beträgt 2,3 % an Vinylester und <0,1 % an HBVE. Zur Abtrennung von Polymerisationsflotte und Restmonomeren wird die Produktlösung einer Destillation unterworfen. Das so gewonnene Copolymere ist farblos bis schwach gelblich gefärbt. Es enthält 48 Mol-% an TFE-Einheiten, 31 Mol-% an copolymerisierten Einheiten des genannten ®Versatic-Vinylesters und 21 Mol-% an copolymerisierten Einheiten von HBVE. Es besitzt eine OH-Zahl von 86. Seine inhärente Viskosität, gemessen bei 25 °C in Tetrahydrofuran, beträgt 0,21 dl/g.
Die Molekulargewichtsbestimmung durch Gelpermeationschromatographie (GPC) in Tetrahydrofuran als Relativmessung, bezogen auf Polystyrolstandards, ergab einen Wert von $\overline{M}_{rel}$ = 45 000.
Das Produkt ist gut löslich in Butylacetat, Xylol, im Gemisch Xylol/Methylisobutylketon 2 : 1, in Propylenglykolmonomethylether und Propylenglykolacetatmonomethylether. Die Viskositätsbestimmung der 50 gew.-%igen Lösungen erfolgte, wie bei Lacken üblich, mit einem Auslaufbecher 4 mm nach DIN 53 211 und ergab in Abhängigkeit vom Lösungsmittel und der Temperatur Werte zwischen 14 s und 63 s.

Beispiele 2 bis 5

Die Copolymerisation wird gemäß den Reaktionsbedingungen von Beispiel 1 durchgeführt, die eingesetzten Monomermengen sind in Tabelle 1 angegeben. In Tabelle 1 sind auch die Zusammensetzung der erhaltenen Copolymeren und die wichtigsten Harzeigenschaften zusammengestellt:

TABELLE 1

| Beispiel-Nr. | 2 | 3 | 4 | 5 |
|---|---|---|---|---|
| Monomereinsatz (g) | | | | |
| TFE | 1760 | 1100 | 1320 | 1320 |
| ®Versatic-Vinylester (wie Beispiel 1) | 2400 | 1800 | 2400 | 1800 |
| HBVE | 510 | 1000 | 620 | 810 |
| Copolymerzusammensetzung (Mol-%) | | | | |
| TFE | 54 | 47 | 48 | 45 |
| ®Versatic-Vinylester | 33 | 30 | 37 | 31 |
| HBVE | 13 | 23 | 15 | 24 |
| OH-Zahl | 53 | 97 | 61 | 76 |
| Inhärente Viskosität $\eta$, (dl/g) | 0,065 | 0,23 | 0,17 | 0,21 |
| $M_{rel}$ | 11000 | 54200 | 37000 | 49000 |

Beispiel 6

In einem 40-Liter-Kessel werden 20 l 1,1,2-Trichlor-1,2,2-trifluorethan, dem 15 g Kaliumcarbonat zugesetzt wurden, vorgelegt. Dann wird der Behälter in üblicher Weise durch Spülen mit Stickstoff von Sauerstoff befreit. Durch zweimaliges Aufpressen von TFE auf 1,6 bar wird die Flotte mit TFE gesättigt. Nach dem Aufheizen des Mediums auf 80 °C wird unter Rühren TFE bis zu einem Druck von 10 bar aufgepreßt. Die Polymerisation wird gestartet durch Zugabe von Bis-(4-tert.-butylcyclohexyl)-peroxidicarbonat, gelöst in einem Monomerengemisch, bestehend aus ®Versatic-Vinylester, wie definiert in Beispiel 1) und HBVE.

Durch Nachdosieren von TFE wird der Druck im Kessel auf 10 bar gehalten und weiteres Monomerengemisch, zusammen mit dem Initiator, entsprechend dem TFE-Verbrauch zugegeben. Die Nachdosierung erfolgt kontinuierlich und ist nach 3,5 Stunden beendet. Insgesamt werden 1760 g TFE, 2400 g des genannten Vinylesters, 510 g HBVE und 230 g Initiator zugesetzt. Eine Stunde nach dem Ende der Monomer- und Initiatorzugabe, nachdem der Druck im Polymerisationskessel auf 9,8 bar gefallen ist, ist die Polymerisation beendet. Man erhält eine klare Produktlösung mit einem Feststoffgehalt von 13 %, der Restmonomergehalt beträgt 1,1 Gew.-% an Vinylester, bezogen auf Polymerisationsmedium, und <0,1 Gew.-% an HBVE.

Zur Abtrennung von Polymerisationsmedium und Restmonomeren wird die Produktlösung einer Destillation unterworfen.

Das so gewonnene Copolymere ist farblos. Es enthält 55 Mol-% an TFE-Einheiten, 34 Mol-% an copolymerisierten Einheiten des ®Versatic-Vinylesters und 11 Mol-% an copolymerisierten Einheiten des HBVE. Es besitzt eine OH-Zahl von 42. Die inhärente Viskosität, gemessen bei 25 °C in Tetrahydrofuran, beträgt 0,06 dl/g.

Die Molekulargewichtsbestimmung durch GPC ergab einen Wert von $\overline{M}_{rel}$ = 10000. Das Produkt ist gut löslich in den in Beispiel 1 genannten Lösemitteln. Die Viskosität einer 50 gew.-%igen Lösung in Butylacetat, ermittelt nach DIN 53 211 (4mm), ergibt einen Wert von 16 s.

Beispiel 7

In einem 40-Liter-Kessel werden 20 l tert.-Butanol, dem 20 g Kaliumcarbonat zugesetzt wurden, vorgelegt. Die Temperatur des vorgelegten Mediums wird auf 30 °C gebracht und der Behälter sodann in der üblichen Weise durch Spülen mit Stickstoff von Sauerstoff befreit. Durch zweimaliges Aufpressen von TFE auf 1,6 bar wird die Flotte mit TFE gesättigt. Dann wird dem Polymerisationsmedium ein Monomerengemisch zugesetzt, bestehend aus 600 g eines ®Versatic-Vinylesters wie definiert in Beispiel 1, und 333 g HBVE. Nach dem Aufheizen des Mediums auf 75 °C wird unter Rühren TFE bis zu einem Druck von 10 bar aufgepreßt. Die Polymerisation wird gestartet durch Zudosierung von 50 ml einer Initiatorlösung, die erhalten wird durch Lösen von 40 g Bis-(4-tert.-butylcyclohexyl)peroxidicarbonat in 500 ml 1,1,2-Trichlor-1,2,2-trifluorethan. Die Polymerisation wird fortgesetzt unter Simultandosierung der restlichen Monomermengen und unter Konstanthaltung der Initiatorkonzentration im Polymerisationsmedium. Eine dreiviertel Stunde nach beendeter Monomer- und Initiatorzudosierung, nachdem der Druck im Polymerisationskessel auf 9,5 bar gefallen ist, ist die Polymerisation beendet. Insgesamt werden an Monomeren 1540 g TFE, 1800 g des genannten Vinylesters, 1000 g HBVE und 44 g Bis-(4-tert.-butylcyclohexyl)peroxidicarbonat zugesetzt. Man erhält eine klare Produktlösung mit einem Feststoffgehalt von 21 %. Der Restmonomergehalt beträgt 1,9 Gew.-% an Vinylester, bezogen auf Polymerisationsmedium, und <0,1 Gew.-% an HBVE.
Zur Abtrennung von Polymerisationsmedium und Restmonomeren wird die Produktlösung einer Destillation unterworfen. Das so gewonnene Copolymere ist farblos. Es enthält 48 Mol-% an TFE-Einheiten, 28 Mol-% an copolymerisierten Einheiten des genannten Vinylesters und 24 Mol-% an copolymerisierten Einheiten des HBVE. Die OH-Zahl beträgt 101. Die inhärente Viskosität, gemessen bei 25 °C in Tetrahydrofuran, beträgt 0,16 dl/g.
Die Molekulargewichtsbestimmung durch GPC in Tetrahydrofuran ergab einen Wert von $\overline{M}_{rel}$ = 34000. Das Produkt ist gut löslich in üblichen Lacklösemitteln.

Beispiel 8

In einem 40-Liter-Kessel werden 22 l entionisiertes Wasser, das 38 g Perfluoroctansäure (mit $NH_3$ neutralisiert), 100 g ®Rongalit (Anlagerungsprodukt von Formaldehyd an Natriumdithionit), 20 g Ammoniumcarbonat und 1 g Mohr'sches Salz gelöst enthält, vorgelegt. Der Kessel wird in üblicher Weise von Sauerstoff befreit, und die Temperatur des vorgelegten Mediums wird auf 45 °C gebracht. Man fügt nun 800 ml einer Monomeremulsion hinzu, die aus 1900 g eines ®Versatic-Vinylesters, wie definiert in Beispiel 1, 810 g HBVE, 5 l entionisiertem Wasser und 3 g Perfluoroctansäure (mit $NH_3$ neutralisiert) besteht und die hergestellt worden ist mit Hilfe eines ®Ultra-Turrax. Sodann wird durch Aufpressen von TFE ein Druck von 10 bar erzeugt und die Polymerisation durch Zugabe von 25 g Ammoniumpersulfat gestartet. Innerhalb von 3 Stunden dosiert man kontinuierlich die restliche Monomeremulsion und weitere 200 g Ammoniumpersulfat zu, die in 2 l entionisiertem Wasser gelöst sind. Eine dreiviertel Stunde nach erfolgter Zugabe wird die Polymerisation beendet. Man erhält eine stabile Dispersion mit einem Feststoffanteil von ca. 12 %.
Die Dispersion wird durch Ansäuern mit Salzsäure koaguliert. Das anfallende Koagulat wird in entionisiertem Wasser gewaschen und anschließend getrocknet.
Das so hergestellte Copolymere enthält 47 Mol-% an TFE-Einheiten, 33 Mol-% an copolymerisierten Einheiten des genannten Vinylesters und 20 Mol-% an copolymerisierten Einheiten des HBVE. Es besitzt eine OH-Zahl von 79. Die inhärente Viskosität, gemessen bei 25 °C in Tetrahydrofuran, beträgt 0,09 dl/g.
Die Molekulargewichtsbestimmung durch GPC ergab einen Wert von $\overline{M}_{rel}$ = 19000.
Das Produkt löst sich gut in üblichen Lacklösemitteln.
Die Viskosität einer 50 gew.-%igen Lösung in Butylacetat, ermittelt durch Auslaufbecher 4 mm nach DIN 53 211 bei 21 °C, ergab einen Wert von 19 s.

Beispiel 9

Abmischung in der Perlmühle

| | |
|---|---|
| Copolymeres aus Beispiel 3 (50 gew.-%ige Lösung in Butylacetat) | 200 g |
| Titandioxid (Typ CL 310) | 122 g |
| | 322 g |

Lackansatz

| | |
|---|---|
| Perlmühlenansatz wie oben | 322 g |
| ®Desmodur N 75 (Hexamethylendiisocyanat-Trimer 75 gew.-%ige Lösung) | 28,2 g |
| Dibutylzinndilaurat (1 gew.-%ige Lösung in Xylol) | 200 mg |

Die Aushärtung des Lackes erfolgt bei 20 °C.

Die Mischung wird mit einem Auftragsgerät auf eine Glasplatte aufgetragen. Die Beschichtung wird verschiedenen Tests unterworfen. Die Ergebnisse sind in Tabelle 2 aufgeführt.

TABELLE 2

| Test | | Ergebnis |
|---|---|---|
| Staubtrocknung | | > 5 h |
| Klebfreitrocknung | | <24 h |
| Pendelhärte 7 d | | 69 s |
| Erichsen-Tiefung 14 d | | 9 mm |
| Sun Test* | 0 h | 79 % |
| | 250 h | 72 % |
| | 500 h | 70 % |
| | 750 h | 70 % |
| | 1000 h | 70 % |

*) Bestimmung des Glanzes der Oberfläche bei 60 ° Spiegelreflexion (60 °C).

Beispiel 10

| | |
|---|---|
| Copolymeres aus Beispiel 3 (50 gew.-%ige Lösung in Butylacetat) | 100 g |
| ®Maprenal MF 900 (pentamethylverethertes Methylolmelamin) | 2,63 g |
| Para-Toluolsulfonsäure | 26 mg |

Filmaufzug

Klarlacke, Rakelaufzug 100 µm naß;
ca. 20 bis 22 µm trocken
PMT (Peak-metal-temperature) 224 bis 232 °C.

Die Mischung wird auf Aluminiumblech (Bonder Al 722) aufgetragen. Die erhaltene Beschichtung wird verschiedenen Tests unterworfen. Die Ergebnisse sind in Tabelle 3 aufgeführt.

TABELLE 3

| Test | Ergebnis |
|---|---|
| Acetontest* | > 100 |
| Impact | 40 ip |
| T-Bend | T 2 |
| Haftung nach T-Bend** | 0 |
| Bleistifthärte | F |

*) Anzahl der Wischvorgänge (Doppelwischungen) bis zum Abreiben der Beschichtung unter Verwendung von mit Aceton getränkter Gaze.

**) Skala 0 bis 5; 0 = bester Wert; visuelle Begutachtung der Haftung am entstandenen T-Bend-Riß

Beispiel 11

| | |
|---|---|
| Copolymeres aus Beispiel 3 (50 %ige Lösung in Butylacetat) | 100 g |
| ®Additol VXL 9946 (blockiertes aliphatisches Isocyanat) (25 gew.-%ige Lösung in Methoxypropylacetat | 102,7 g |

Filmaufzug

Die Mischung wird als Klarlack auf Aluminiumblech (Bonder Al 722) aufgetragen: Rakelaufzug 100 µm naß,; ca. 20 bis 22 µm trocken. PMT (Peak-metal-temperature) 224 bis 232 °C. Die Beschichtung wird verschiedenen Tests unterworfen. Die Ergebnisse sind in Tabelle 4 aufgeführt.

TABELLE 4

| Test | Ergebnis |
|---|---|
| Acetontest | >100 |
| Impact | 40 ip |
| T-Bend | T 2 |
| Haftung nach T-Bend | 0 |
| Bleistifthärte | F-H |

Beispiel 12

| | |
|---|---|
| Copolymeres aus Beispiel 5 (50 gew.-%ige Lösung in Xylol/Methylisobutylketon 1 : 2) | 100 g |
| ®Maprenal MF 900 (pentamethylveretheres Methylolmelamin) | 3,1 g |
| p-Toluolsulfonsäure | 62,5 mg |

Filmaufzug

Klarlacke, Rakelaufzug 100 µm naß; 20 bis 22 µm trocken.
Einbrennbedingungen: 190 °C, 15 min.
Die Beschichtung wird verschiedenen Tests unterworfen.
Die Ergebnisse sind in Tabelle 5 aufgeführt.

TABELLE 5

| Test | Ergebnis |
|---|---|
| Acetontest | > 100 |
| Impact | > 100 ip (Blechriß bei 100 ip) |
| T-Bend | T 2 |
| Haftung nach T-Bend | 0 |
| Bleistifthärte | F |

Beispiel 13

Einsatz von UV-Absorbern in Kombination mit kalthärtenden Fluorlackbindemitteln:

| | |
|---|---|
| Copolymeres aus Beispiel 3 (50 gew.-%ige Lösung in Butylacetat) | 100 g |
| Dibutylzinndilaurat (1 gew.-%ige Lösung in Xylol) | 100 mg |
| ®Tinuvin 292 (Ciba Geigy) (sterisch gehindertes Amin) | 0,61 g |
| ®Tinuvin 900 (Ciba Geigy) 2-[Hydroxy-3,5 di(1,1-dimethylbenzyl) phenyl]2H-benztriazol (10 gew.-%ige Lösung in Xylol) | 6,1 g |
| ®Desmodur N 75 (Hexamethylendiisocyanat-Trimer, 75 % Lösung) | 14,2 g |

Applikation: Spritzen: 2 Kreuzgänge = ca. 25 bis 30 µm trocken. Die Aushärtung erfolgt bei Raumtemperatur. Die Beschichtung wird verschiedenen Tests unterworfen. Die Ergebnisse sind in Tabelle 6 aufgeführt.

TABELLE 6

| Test | Ergebnis |
|---|---|
| Staubtrocknung | 1 h 40' |
| Klebfreitrocknung | 2 h 10' |
| Pendelhärte 7 d | 78 s |
| Trübung* | 1 |

*) Skala 0 bis 5; 0 = bester Wert.

In den vorstehenden Beispielen wurden folgende Prüfmethoden und Tests verwendet:

Staubtrocknung entspricht Trockengrad 1 nach DIN-Norm 53 150 "Bestimmung des Trockengrads von Anstrichstoffen"

Klebfreitrocknung entspricht Trockengrad 2 nach DIN-Norm 53 150

| | |
|---|---|
| Pendelhärte nach König : | DIN-Norm 53 157 |
| Tiefung : | ISO-Vorschrift 1520 |
| Impact : | ECCA (European Coil-Coater's Association) T5; entspricht den Referenznormen ASTM D 2794 - 69 und ISO R 291 |
| Bleistifthärte : | ECCA T 4 |
| T-Bend : | Biegeprüfung. |

Biegeprüfung:

Der Lack wird auf Aluminiumblech Bonder Al 722 aufgetragen. Filmstärke naß 100 µm, entspricht 20 bis 22 µm trocken. Ein 1 cm breiter Streifen dieses Blechs wird mit außenliegendem Film geknickt und um 180 ° gebogen. Dieser Vorgang wird (mit zunehmendem Biegeradius) an gleichen Streifen solange wiederholt, bis der Film nicht mehr reißt (TO = reißt beim ersten Biegevorgang nicht; T1 = reißt beim zweiten Biegevorgang nicht, usw.)

## Patentansprüche

**1.** Vernetzbare, fluorhaltige Copolymere, dadurch gekennzeichnet, daß sie bestehen aus:

a) 15 bis 70 Mol-% an copolymerisierten Einheiten eines Vinylesters der Formel

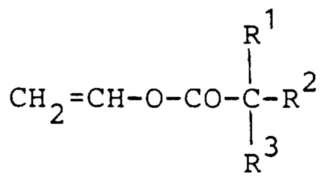

,

worin $R^1$, $R^2$ und $R^3$ verzweigte oder geradkettige Alkylreste oder Cycloalkylreste darstellen, höchstens einer dieser Reste Wasserstoff und mindestens einer dieser Reste eine Methylgruppe ist, wobei ferner der gesamte Acylrest des Vinylesters mindestens 9 und höchstens 28 C-Atome besitzt,

b) 5 bis 50 Mol-% an copolymerisierten Einheiten eines Hydroxyalkylvinylethers der Formel

$CH_2 = CH\text{-}O\text{-}R^4\text{-}OH$ ,

worin $R^4OH$ eine verzweigte oder geradkettige Hydroxyalkylgruppe mit 1 bis 6 C-Atomen darstellt,

c) copolymerisierten Einheiten des Tetrafluorethylens in einer Menge, die die Summe der Komponenten a) plus b) plus c) auf 100 ergänzt, jedoch mit der Maßgabe, daß mindestens 10 Mol-% an copolymerisierten Einheiten des Tetrafluorethylens im Copolymeren vorhanden sind.

**2.** Vernetzbare, fluorhaltige Copolymere gemäß Anspruch 1, dadurch gekennzeichnet, daß sie bestehen aus

a) 15 bis 55 Mol-% an copolymerisierten Einheiten eines Vinylesters der Komponente a) des Anspruchs 1,

b) 5 bis 40 Mol-% an copolymerisierten Einheiten eines Hydroxyalkylvinylethers der Komponenten b) des Anspruchs 1,

c) copolymerisierten Einheiten des Tetrafluorethylens in einer Menge, die die Summe der Komponenten a) plus b) plus c) auf 100 ergänzt, jedoch mit der Maßgabe, daß mindestens 25 Mol-% an copolymerisierten Einheiten im Copolymeren vorhanden sind.

**3.** Vernetzbare, fluorhaltige Copolymere nach einem oder mehreren der Ansprüche 1 und 2, dadurch gekennzeichnet, daß der Vinylester der Komponente a) einen Acylrest mit 9 bis 11 C-Atomen enthält, wobei höchstens einer der Reste $R^1$, $R^2$ und $R^3$ Wasserstoff und mindestens einer dieser Reste eine Methylgruppe ist.

**4.** Vernetzbare, fluorhaltige Copolymere gemäß einem oder mehreren der Ansprüche 1 bis 3, dadurch gekennzeichnet, daß der Hydroxyvinylether 4-Hydroxy-n-butylvinylether ist.

**5.** Verfahren zur Herstellung von vernetzbaren, fluorhaltigen Copolymeren, dadurch gekennzeichnet, daß man

a) einen Vinylester der Formel

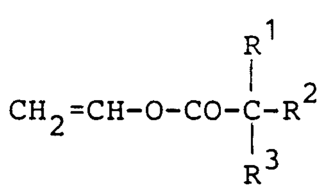

,

worin $R^1$, $R^2$ und $R^3$ verzweigte oder geradkettige Alkylreste oder Cycloalkylreste darstellen, höchstens einer dieser Reste Wasserstoff und mindestens einer dieser Reste eine Methylgruppe ist, wobei ferner der gesamte Acylrest des Vinylesters mindestens 9 und höchstens 28 C-Atome besitzt,

b) einen Hydroxyalkylvinylether der Formel

$CH_2 = CH\text{-}O\text{-}R^4\text{-}OH$ ,

worin $R^4OH$ eine verzweigte oder geradkettige Hydroxyalkylgruppe mit 1 bis 6 C-Atomen darstellt, sowie

c) Tetrafluorethylen

in solchen Mengen miteinander copolymerisiert, daß Copolymere erhalten werden, die aus

a) 15 bis 70 Mol-% an copolymerisierten Einheiten des genannten Vinylesters,

b) 5 bis 50 Mol-% an copolymerisierten Einheiten des genannten Hydroxyalkylvinylether und

c) aus copolymerisierten Einheiten des Tetrafluorethylens in einer Menge bestehen, die die Summe der Komponenten a) plus b) plus c) auf 100 ergänzt, jedoch mit der Maßgabe, daß mindestens 10 Mol-% an copolymerisierten Einheiten des Tetrafluorethylens in den Copolymeren vorhanden sind.

**6.** Verfahren zur Herstellung von vernetzbaren, fluorhaltigen Copolymeren nach Anspruch 5, dadurch gekennzeichnet, daß man einen Vinylester der Komponente a), einen Hydroxyalkylvinylether der Komponente b) sowie c) Tetrafluorethylen in solchen Mengen miteinander copolymerisiert, daß Copolymere erhalten werden, die aus

a) 15 bis 55 Mol-% an copolymerisierten Einheiten des genannten Vinylesters,

b) 5 bis 40 Mol-% an copolymerisierten Einheiten des genannten Hydroxyalkylvinylethers und

c) aus copolymerisierten Einheiten des Tetrafluorethylens in einer solchen Menge bestehen, die die Summe der Komponenten a) plus b) plus c) auf 100 ergänzt, jedoch mit der Maßgabe, daß mindestens 25 Mol-% an copolymerisierten Einheiten des Tetrafluorethylens in den Copolymeren vorhanden sind.

**7.** Verfahren gemäß einem oder mehreren der Ansprüche 5 und 6, dadurch gekennzeichnet, daß der als Komponente a) eingesetzte Vinylester einen Acylrest mit 9 bis 11 C-Atomen enthält, wobei höchstens einer der Reste $R^1$, $R^2$ und $R^3$ Wasserstoff und mindestens einer dieser Reste eine Methylgruppe ist.

**8.** Verfahren gemäß einem oder mehreren der Ansprüche 5 bis 7, dadurch gekennzeichnet, daß der als Komponente b) eingesetzte Hydroxyvinylether der 4-Hydroxy-n-butylvinylether ist.

**9.** Lackzusammensetzung für industrielle Anwendungen, enthaltend übliche Pigmente und Füllstoffe, Vernetzungskomponenten, Lösungsmittel und für Lacke übliche Hilfsstoffe, dadurch gekennzeichnet, daß sie 10 bis 60 Gew.-% eines Copolymeren gemäß einem oder mehreren der Ansprüche 1 bis 4 enthalten.

**10.** Lackzusammensetzung gemäß Anspruch 9, dadurch gekennzeichnet, daß die Vernetzungskomponente ein Melaminharz, ein Polyisocyanat oder ein blockiertes Polyisocyanat ist.

**11.** Verwendung der Lackzusammensetzung gemäß einem oder mehreren der Ansprüche 9 und 10 für das Bandbeschichtungsverfahren.

## Claims

**1.** A crosslinkable, fluorine-containing copolymer, comprising:

a) 15 to 70 mol % of copolymerized units of a vinyl ester of the formula

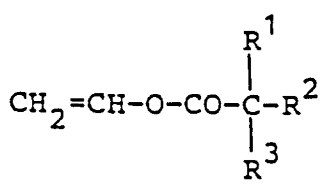

in which $R^1$, $R^2$ and $R^3$ are branched or straight-chain alkyl radicals or cycloalkyl radicals, at most one of these radicals is hydrogen and at least one of these radicals is a methyl group, and, furthermore, the entire acyl radical of the vinyl ester contains at least 9 and at most 28 carbon atoms,

b) 5 to 50 mol % of copolymerized units of a hydroxyalkyl vinyl ether of the formula

$CH_2 = CH\text{-}O\text{-}R^4\text{-}OH$

in which $R^4OH$ is a branched or straight-chain hydroxyalkyl group having 1 to 6 carbon atoms, and
c) copolymerized units of tetrafluoroethylene in an amount which makes up the sum of components a) plus b) plus c) to 100, but with the proviso that at least 10 mol % of copolymerized units of tetrafluoroethylene are present in the copolymer.

**2.** A crosslinkable, fluorine-containing copolymer as claimed in claim 1, comprising
a) 15 to 55 mol % of copolymerized units of a vinyl ester of component a) of claim 1,
b) 5 to 40 mol % of copolymerized units of a hydroxyalkyl vinyl ether of component b) of claim 1, and
c) copolymerized units of tetrafluoroethylene in an amount which makes up the sum of components a) plus b) plus c) to 100, but with the proviso that at least 25 mol % of copolymerized units of tetrafluoroethylene are present in the copolymer.

**3.** A crosslinkable, fluorine-containing copolymer as claimed in one or more of claims 1 and 2, wherein the vinyl ester of component a) contains an acyl radical having 9 to 11 carbon atoms, where at most one of radicals $R^1$, $R^2$ and $R^3$ is hydrogen and at least one of these radicals is a methyl group.

**4.** A crosslinkable, fluorine-containing copolymer as claimed in one or more of claims 1 to 3, wherein the hydroxyvinyl ether is 4-hydroxy-n-butyl vinyl ether.

**5.** A process for the preparation of a crosslinkable, fluorine-containing copolymer, wherein
a) a vinyl ester of the formula

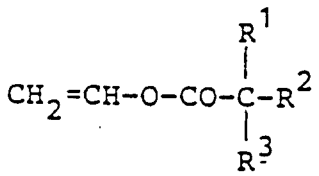 ,

in which $R^1$, $R^2$ and $R^3$ are branched or straight-chain alkyl radicals or cycloalkyl radicals, at most one of these radicals is hydrogen and at least one of these radicals is a methyl group, and, furthermore, the entire acyl radical of the vinyl ester contains at least 9 and at most 28 carbon atoms,
b) a hydroxyalkyl vinyl ether of the formula

$CH_2 = CH\text{-}O\text{-}R^4\text{-}OH$

in which $R^4OH$ is a branched or straight-chain hydroxyalkyl group having 1 to 6 carbon atoms, and
c) tetrafluoroethylene are copolymerized with one another in amounts such that a copolymer is obtained which comprises
a) 15 to 70 mol % of copolymerized units of the vinyl ester mentioned,
b) 5 to 50 mol % of copolymerized units of the hydroxyalkyl vinyl ether mentioned, and
c) copolymerized units of tetrafluoroethylene in an amount which makes up the sum of components a) plus b) plus c) to 100, but with the proviso that at least 10 mol % of copolymerized units of tetrafluoroethylene are present in the copolymer.

**6.** A process for the preparation of a crosslinkable, fluorine-containing copolymer as claimed in claim 5, wherein a vinyl ester of component a), a hydroxyalkyl vinyl ether of component b) and c) tetrafluoroethylene are copolymerized with one another in amounts such that a copolymer is obtained which comprises
a) 15 to 55 mol % of copolymerized units of the vinyl ester mentioned,
b) 5 to 40 mol % of copolymerized units of the hydroxyalkyl vinyl ether mentioned, and
c) copolymerized units of tetrafluoroethylene in an amount which makes up the sum of components a) plus b) plus c) to 100, but with the proviso that at least 25 mol % of copolymerized units of tetrafluoroethylene are present in the copolymer.

7. The process as claimed in one or more of claims 5 and 6, wherein the vinyl ester employed as component a) contains an acyl radical having 9 to 11 carbon atoms, where at most one of the radicals $R^1$, $R^2$ and $R^3$ is hydrogen and at least one of these radicals is a methyl group.

8. The process as claimed in one or more of claims 5 to 7, wherein the hydroxyvinyl ether employed as component b) is 4-hydroxy-n-butyl vinyl ether.

9. A surface-coating composition for industrial applications, containing conventional pigments and fillers, crosslinking components, solvents and auxiliaries which are conventional for surface coatings, which contains 10 to 60% by weight of a copolymer as claimed in one or more of claims 1 to 4.

10. A surface-coating composition as claimed in claim 9, wherein the crosslinking component is a melamine resin, a polyisocyanate or a masked polyisocyanate.

11. The use of a surface-coating composition as claimed in one or more of claims 9 and 10 for coil-coating methods.

**Revendications**

1. Copolymères fluorés réticulables, caractérisés en ce qu'ils ont la constitution suivante :
   a) 15 à 70 % en moles de motifs copolymérisés d'un ester vinylique de formule

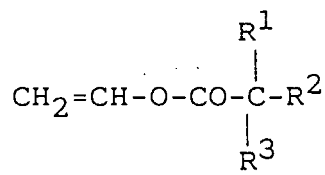

   dans laquelle $R^1$, $R^2$ et $R^3$ sont des radicaux alkyle à chaîne droite ou ramifiée ou des radicaux cycloalkyle, au plus l'un de ces radicaux étant un hydrogène et au moins l'un de ces radicaux étant un groupe méthyle, le fragment acyle de l'ester vinylique ayant en tout au moins 9 et au plus 28 atomes de carbone,
   b) 5 à 50 % en moles de motifs copolymérisés d'un oxyde d'hydroxyalkyle et de vinyle de formule

$$CH_2 = CH\text{-}O\text{-}R^4\text{-}OH$$

   dans laquelle $R^4OH$ est un groupe hydroxyalkyle à chaîne droite ou ramifiée ayant de 1 à 6 atomes de carbone,
   c) des motifs copolymérisés de tétrafluoréthylène en une quantité complétant à 100 la somme des composants a), b) et c), mais du moment que le copolymère contient au moins 10 % en mole de motifs copolymérisés de tétrafluoréthylène.

2. Copolymères fluorés réticulables selon la revendication 1, caractérisés en ce qu'ils ont la constitution suivante :
   a) 15 à 55 % en moles de copolymérisés d'un ester vinylique d'un composant a) selon la revendication 1,
   b) 5 à 40 % en moles de motifs copolymérisés d'un oxyde d'hydroxyalkyle et de vinyle correspondant aux composants b) selon la revendication 1,
   c) des motifs copolymérisés de tétrafluoréthylène en une quantité complétant à 100 la somme des composants a), b) et c), mais du moment que le copolymère contient au moins 25 % en moles de motifs copolymérisés.

3. Copolymères fluorés réticulables selon l'une ou plusieurs des revendications 1 et 2, caractérisés en ce que l'ester vinylique du composant a) contient un radical acyle ayant de 9 à 11 atomes de carbone, au plus l'un des radicaux $R^1$, $R^2$ et $R^3$ étant un hydrogène et au moins l'un de ces radicaux étant un groupe méthyle.

4. Copolymères fluorés réticulables selon l'une ou plusieurs des revendications 1 à 3, caractérisés en ce que l'oxyde d'hydroxyalkyle et de vinyle est l'oxyde d'hydroxy-4 n-butyle et de vinyle.

5. Procédé pour préparer des copolymères fluorés réticulables, caractérisé en ce qu'on copolymérise les uns avec les autres
   a) un ester vinylique de formule

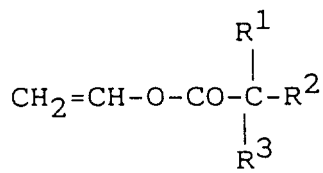

   dans laquelle $R^1$, $R^2$ et $R^3$ sont des radicaux alkyle à chaîne droite ou ramifiée ou des radicaux cycloalkyle, au plus l'un de ces radicaux étant un hydrogène et au moins l'un de ces radicaux étant un groupe méthyle, le fragment acyle de l'ester vinylique ayant en tout au moins 9 et au plus 28 atomes de carbone,
   b) un oxyde d'hydroxyalkyle et de vinyle de formule

$$CH_2 = CH\text{-}O\text{-}R^4\text{-}OH$$

   dans laquelle $R^4OH$ est un groupe hydroxyalkyle à chaîne droite ou ramifiée ayant de 1 à 6 atomes de carbone, et
   c) du tétrafluoréthylène,
   en des quantités telles que l'on obtienne des copolymères constitués
   a) de 15 à 70 % en moles de motifs copolymérisés dudit ester vinylique,
   b) de 5 à 50 % en moles de motifs copolymérisés dudit oxyde d'hydroxyalkyle et de vinyle, et
   c) de motifs copolymérisés de tétrafluoréthylène en une quantité complétant à 100 la somme des composants a), b) et c), mais du moment que le copolymère contient au moins 10 % en mole de motifs copolymérisés de tétrafluoréthylène.

6. Procédé pour préparer des copolymères fluorés réticulables selon la revendication 5, caractérisé en ce qu'on copolymérisé les uns avec les autres un ester vinylique du composant a), un oxyde d'hydroxyalkyle et de vinyle du composant b), et c) du tétrafluoréthylène, en des quantités telles que l'on obtienne un copolymère ayant la constitution suivante :
   a) 15 à 55 % en moles de motifs copolymérisés dudit ester vinylique,
   b) 5 à 40 % en moles de motifs copolymérisés dudit oxyde d'hydroxyalkyle et de vinyle, et
   c) des motifs copolymérisés de tétrafluoréthylène en une quantité complétant à 100 la somme des composants a), b) et c), mais du moment que le copolymère contient au moins 25 % en moles de motifs copolymérisés.

7. Procédé selon l'une ou plusieurs des revendications 5 ou 6, caractérisé en ce que l'ester vinylique utilisé comme composant a) contient un radical acyle ayant de 9 à 11 atomes de carbone, au plus l'un des radicaux $R^1$, $R^2$ et $R^3$ étant un hydrogène et au moins l'un de ces radicaux étant un groupe méthyle.

8. Procédé selon l'une ou plusieurs des revendications 5 à 7, caractérisé en ce que l'oxyde d'hydroxyalkyle et de vinyle utilisé en tant que composant b) est l'oxyde d'hydroxy-4 n-butyle et de vinyle.

9. Composition de vernis pour applications industrielles, contenant des additifs usuels pigments et charges, agents de réticulation, solvants et adjuvants usuels pour les peintures et vernis, caractérisée en ce qu'elle contient de 10 à 60 % en poids d'un copolymère selon l'une ou plusieurs des revendications 1 à 4.

10. Composition de vernis selon la revendication 9, caractérisée en ce que l'agent de réticulation est une résine de mélamine, un polyisocyanate ou un polyisocyanate bloqué.

11. Utilisation de la composition de peinture selon l'une des revendications 9 ou 10 pour le procédé de laquage en bande.